(19) Europäisches Patentamt

European Patent Office

Office européen des brevets

(11) EP 0 757 066 A1

## EUROPEAN PATENT APPLICATION

(43) Date of publication:
05.02.1997 Bulletin 1997/06

(21) Application number: 96201980.8

(22) Date of filing: 13.07.1996

(51) Int. Cl.$^6$: **C08F 297/04**, C09J 153/02, D04H 13/00

(84) Designated Contracting States:
BE DE ES FR GB NL

(30) Priority: 04.08.1995 IT MI951727

(71) Applicant: ENICHEM ELASTOMERI S.r.l.
I-20124 Milan (IT)

(72) Inventors:
• Viola, Gian Tommaso
  48015 Cervia, Ravenna (IT)
• Giordano, Sergio
  20068 Peschiera Borromeo, Milano (IT)
• Riva, Antonio
  20143 Milano (IT)
• Gurnari, Antonio
  48100 Ravenna (IT)

(74) Representative: Fusina, Gerolamo et al
Ing. Barzanò & Zanardo Milano S.p.A,
Via Borgonuovo, 10
20121 Milano (IT)

(54) **Adhesive composition for non-woven fabrics based on block copolymers**

(57) Adhesive for non-woven fabrics which comprises a block polymeric composition of the type A-B, wherein A represents the block of monoalkenylarene and B represents the block of 1,3-butadiene as such or at various degrees of hydrogenation, consisting of:

a) from 15 to 50% by weight of uncoupled linear structures of the type A-B,
b) coupled radial structures having general formula $(A-B)_4-M$ in a quantity of between 50 and 85% by weight, wherein M is a tetravalent metal, preferably Silicon.

EP 0 757 066 A1

## Description

The present invention relates to adhesive compositions, in particular adhesive compositions for non-woven fabrics, based on block copolymers.

Block copolymers are always used more in adhesive compositions mainly owing to their high cohesive strength and their capacity to behave like a vulcanized rubber.

These block copolymers, like those described in US-A-3.239.478, are mainly linear or radial styrene-butadiene or styrene-isoprene block copolymers. The above linear copolymers have the structure styrene-butadiene-styrene or styrene-isoprene-styrene. The high cohesive strength of these styrene-diene block copolymers is primarily attributed to their network structure deriving from their formation of domains.

For adhesive applications it is necessary to combine a high cohesive strength with a good tack, which is indispensable for the adhesion of two supports of the same or different nature.

For adhesive applications suitable for binding non-woven fabrics the following requirements are necessary:

1) good cohesion at the temperature of use of the finished product, generally about 35-40°C;
2) low viscosity at the temperature of application (110-140°C) considering the type of support used and to increase the operating rate.

US-A-4.096.203 describes a process for controlling the cohesive strength of adhesive compositions based on block copolymers. The above process involves a final coupling, with a coupling efficiency of between 20 and 80%, with the use of coupling agents. According to this document the conjugated diene is preferably isoprene.

The hot-melt adhesive composition containing the mixture of polymers described in US-A-4.096.203, has the disadvantage however of a low cohesion and limited resistance to temperature.

A block copolymer composition has now been found which can be used in the formulation of adhesives for non-woven fabrics and which overcomes the above disadvantages.

In accordance with this, the present invention relates to the use as an adhesive for non-woven fabrics, of a block polymeric composition of the type A-B, wherein A represents the block of a monoalkenylarene and B represents the block of 1,3-butadiene as such or at various degrees of hydrogenation, the content of monoalkenylarene A being between 30 and 50% by weight, preferably between 35 and 45% by weight, with respect to the sum of A and B, which comprises:

a) from 15 to 50% by weight, preferably from 20 to 45% by weight, of uncoupled linear structures of the type A-B, having a weight average molecular weight of between 15,000 and 50,000 daltons, preferably between 25,000 and 40,000 daltons;
b) coupled radial structures having general formula $(A-B)_4-M$ in a quantity of between 50 and 85% by weight, preferably between 55 and 80% by weight, having a weight average molecular weight of between 80,000 and 180,000, preferably between 90,000 and 150,000, wherein M is a tetravalent metal, preferably Silicon.

In the preferred form of embodiment, the monoalkenylarene is styrene. Other monoalkenylarenes which can be used are $\alpha$-methyl styrene, ter-butyl styrene and other differently alkylated styrenes.

The present invention also relates to a process for the preparation of the block copolymer composition of the present invention, which comprises:

1) reaction of a monoalkenylarene with a Lithium derivative having general formula R-Li wherein R is a hydrocarbon radical selected from aliphatic and cycloaliphatic radicals with a number of carbon atoms of between 2 and 20;
2) reaction with butadiene of the mixture resulting from step (1);
3) reaction of the mixture resulting from step (2) with a tetrafunctional coupling agent $MX_4$, wherein X is selected from Chlorine, Bromine and Iodine, preferably Chlorine, and M is a metal selected from Tin and Silicon, preferably Silicon, the above coupling agent being added in a quantity of between 50 and 85 moles for every 100 moles of the Lithium compound of step (1);
4) treatment of the mixture obtained in step (3) with a quenching agent, preferably selected from monochloro-derivative silico-organic compounds, in such a quantity that the sum of the moles of the quenching agent and the coupling agent is at least stoichiometrically equal to the moles of Lithium of step (1);
5) recovery of the block copolymer composition thus produced;
6) optional hydrogenation, partial or total, of the dienic block B of the composition of the product obtained in step (5).

The more the quantity of $M-X_4$ is below the stoichiometric value, the higher the content of linear copolymer will be. The quantity of quenching agent of step (4) will be such that the molar sum of the quenching agent and $M-X_4$ is at

least equal to the moles of R-Li. It is preferable however to use an excess quantity of quenching agent.

Quenching agents of the active centres of anionic polymerization are well known to experts in the field. Among these water and alcohols can be mentioned, but it is preferable, in the process of the present invention, to use compounds having the general formula X-Si-(R)$_3$ as quenching agents, wherein X is selected from chlorine, bromine and iodine and R is a monofunctional alkyl or aryl radical. In the preferred embodiment X is Chlorine and R is selected from methyl and phenyl, and consequently the preferred quenching agents are selected from monochlorotrimethylsilane and monochlorotriphenylsilane.

The block copolymers prepared according to the process of the present invention have coupling efficiency of between 50 and 85%.

The term coupling efficiency means the number of coupled molecules divided by the sum of the number of coupled molecules and the number of uncoupled molecules. As stated above, the coupling efficiency can be varied by changing the quantity of coupling agent. Analytical methods are also available, such as gel permeation chromatography, to determine the type and molecular weights of the polymeric fractions.

The preparation process of the adhesive polymeric composition is carried out with the anionic polymerization techniques well-known to experts.

In step (1), the monoalkenyl arene is reacted with an organoalkyl Lithium derivative in an inert solvent with the formation of a living polymer having the structure A-Li. The inert solvent can be an aromatic, naphthenic, aliphatic hydrocarbon and the mixtures thereof, for example benzene, toluene, xylenes, cyclohexane, n-hexane, n-pentane, possibly modified with alkenes, for example pentenes.

Examples of the Lithium organoderivative having the formula R-Li are ethyllithium, n-propyllithium, isopropyllithium, n-butyllithium, sec-butyllithium, ter-octyllithium; the Lithium organoderivative is preferably selected from n-butyllithium and sec-butyllithium. The concentration of the alkyllithium initiator can be modified to control the molecular weight. The concentration of the above initiator is generally between 0.25 and 50 mmoles per 100 grams of monomer, even if there are no limits for using higher quantities.

The temperature of step (1) is generally between 0 and 100°C, preferably between 20 and 60°C, sufficient however to maintain the monomers in a liquid phase.

When step (1) has been completed, or when almost all the monomer has disappeared and the living polymer has an A-Li structure, 1,3-butadiene is added in step (2); this step is carried out at a temperature which is more or less the same as that of step (1).

When the butadiene has been almost totally used up and consequently at the end of step (2), the polymer has basically a structure of the type A-B-Li, even if minor quantities of tapered polymers, or deriving from the statistic polymerization of the two monomers, can be present.

At the end of step (2), the polymeric solution is treated with the coupling agent having general formula MX$_4$, wherein X is selected from Chlorine, Bromine and Iodine and M is a metal selected from Silicon and Tin, preferably Silicon. This coupling agent is added in a quantity of between 50 and 85 moles per 100 moles of the Lithium compound of step (1). It is obvious that the greater the quantity of MX$_4$ added, the greater the coupling degree will be. This reaction step is usually carried out at a temperature of between 40 and 120°C, preferably between 70 and 110°C.

Step (4) consists in the quenching of the anionic centres still present at the end of step (3).

The polymeric mixture is then recovered by means of the conventional techniques, preferably by filtration, and subjected to possible hydrogenation, either partial or total, of the double olefinic bonds.

The polymeric mixture is then used in adhesive formulations for binding non-woven fabrics in the sanitary field.

A further object of the present invention therefore relates to an adhesive composition for non-woven fabrics which comprises, in addition to possible pigments, fillers, stabilizers and oxidation inhibitors,:

a) a block copolymer composition as defined above,
b) tackifying resins, preferably a modified terpenic hydrocarbon resin, with a softening point of between 80 and 115°C, preferably about 105°C, in a quantity of between 150 and 450 parts per 100 parts of rubber (a), preferably between 250 and 350 parts (phr);
c) fluidifying and/or plasticizing resins, preferably liquid polyterpenic resins, in a quantity of between 50 and 150 parts per 100 parts of rubber (a), preferably between 70 and 120 phr.

Block copolymers do not usually have sufficient adhesive properties to be able to be used alone. It is therefore necessary for the final formulation to contain tackifying resins which are compatible with the block copolymer composition. These tackifying resins usually have a softening point (ball and ring) of between about 80 and about 115°C. A resin which is particularly used in similar formulations is a modified terpenic hydrocarbon resin, with softening points of about 105°C.

The adhesive formulations of the present invention also contain fluidifying and/or plasticizing resins. Among these liquid polyterpenic resins can be mentioned, for example the one known under the trade-name of Zonavez α 25. Other liquid fluidifying resins which can be used in the adhesive formulation of the present invention are aliphatic resins, from esters of rosin or tall oil.

Among the plasticizers, extending oils can be mentioned. These oils are well-known to experts in the field and comprise both those with a high content of saturated products and those with a high content of aromatics, naphthenic or naphthenic/paraffinic oil, telomeres of butene.

The adhesive compositions of the present invention can be modified with other materials, comprising pigments, fillers and the like, as well as stabilizers and oxidation inhibitors. Stabilizers and oxidation inhibitors are usually added to the polymeric composition to protect the polymers against degradation during the preparation and use of the adhesive composition. Owing to the different degradation mechanism of the polymers, combinations of antioxidants are often more effective.

Among the most well-known antioxidants are hindered phenols, organometallic compounds, aromatic amines and sulphur compounds.

Examples of antioxidants commercially available are "Inox 220", or 4,4-methylene-bis-(2,6-di-t-butyl-phenol), "Inox 330", or 3,4,6-tris (3,5-di-t-butyl-p-hydroxybenzyl)-1,3,5-trimethyl benzene, "Dalpac 4C" or 2,6-di-(t-butyl)-p-cresol, "Naugawhite" or alkylated bisphenol, "Butyl Zimate" or zinc dibutyl dithiocarbamate, "Agerite Geltrol" or alkylated-arylated bisphenolic phosphite, "Irganox 1010" or terbutyl hydroxyphenyl propionate and "Irganox 565" or a derivative of thiotriazine.

The adhesive composition generally contains one or more antioxidants in a quantity of between 0.01 and 5.0% by weight.

The adhesive compositions of the present invention can be prepared by mixing the block copolymers, the adhesive resin, the fluidifying resin and/or plasticizers (and any other possible components) in a solvent (for example toluene) and removing the solvent; alternatively, in a preferred embodiment, the above compositions can be prepared by the simple mixing of the components at a high temperature, for example at about 150-190°C (hot melt), preferably at about 170°C.

The following examples provide a better understanding of the present invention.

COMPARATIVE EXAMPLE 1

700 grams of cyclohexane containing 100 ppm of tetrahydrofuran and 39 grams of styrene are fed into a 2 litre stainless steel reactor equipped with a thermostatic jacket and all the equipment necessary for the charging of the ingredients.

The mixture is heated to a temperature of 50°C and 1.65 grams of a solution at 13% by weight of n-butyllithium are added. After 25 minutes of reaction the temperature has risen to 57°C. A sample is taken to check the complete conversion of the styrene and 61 grams of butadiene are then added and the mixture left to react for a further 20 minutes until the complete conversion of the second monomer.

The temperature of the final mixture is about 95°C.

A living copolymer is thus obtained with two styrene-butadiene blocks, which is subjected to coupling reaction with silicon tetrachloride to produce a radial polymer with symmetrical branches and a uncoupled fraction of which the quantity can vary as desired by changing the ratio between active lithium and coupling agent.

For this purpose 1.42 grams of a solution at 10% by weight of Silicon tetrachloride is added, at a temperature of 90°C, to the solution containing the living two-block polymer, and the mixture is left to react for about 5 minutes.

The polymeric solution is discharged from the reactor and the two antioxidants Irganox 565 (0.05 g) and TNPP, or triphenylnonylphosphite (0.5 g) are added.

The solvent is then removed by distillation in a vapour stream and the residual linear copolymer, in lump form, is dried for three hours in a vacuum oven at 60°C.

Analysis of the molecular weights, carried out by GPC in tetrahydrofuran at 25°C, shows a copolymer with a weight average molecular weight of 118,200 daltons consisting of:

a) 30,000 daltons (peak molecular weight) of the fraction (S-B) of about 2%;
b) 120,000 daltons (peak molecular weight) of the coupled fraction (S-B)4-Si in a quantity of about 98%.

The molecular weight of the polystyrene block, also measured by GPC after demolition of the polymer carried out with $OsO_4$ was equal to 12,800 daltons in exact agreement with the FT-IR measurement which gave a result equal to 40.0%.

The coupling efficiency was given by the relation ((S-B)4/Tot.area) x 100 wherein Tot. area is the total area. In this case the coupling efficiency is about 98%.

EXAMPLE 2

Under the same operating conditions described in example 1, a living S-B block copolymer was prepared which, on the complete conversion of the butadiene, was reacted with 0.994 grams of a solution in cyclohexane of SiCl$_4$ at 10% by weight. After 5 minutes of reaction 1.1 grams of a solution in cyclohexane of monochlorotrimethylsilane at 10% by weight were charged into the reactor.

Analysis of the molecular weights, carried out by GPC in tetrahydrofuran at 25°C, shows a copolymer with a weight average molecular weight of 93,000 daltons consisting of:

a) 30,000 daltons (peak molecular weight) of the uncoupled fraction (S-B) in a quantity of about 30%;
b) 120,000 daltons (peak molecular weight) of the coupled fraction (S-B)4-Si in a quantity of about 70%.

The molecular weight of the polystyrene block, also measured by GPC after demolition of the polymer carried out with OsO4 was equal to 12,600 daltons in exact agreement with the FT-IR measurement which gave a result equal to 40.1%. In this case the coupling efficiency was equal to 70% by weight.

## EXAMPLE 3

Under the same operating conditions described in example 1, a living S-B block copolymer was prepared which, on the complete conversion of the butadiene, was reacted with 0.85 grams of a solution in cyclohexane of SiCl$_4$ at 10% by weight. After 5 minutes of reaction 1.45 grams of a solution in cyclohexane of monochlorotrimethylsilane at 10% by weight were charged into the reactor.

Analysis of the molecular weights, carried out by GPC in tetrahydrofuran at 25°C, shows a copolymer with a weight average molecular weight of 84,200 daltons consisting of:

a) 30,600 daltons (peak molecular weight) of the uncoupled fraction (S-B) in a quantity of about 40%;
b) 120,000 daltons (peak molecular weight) of the coupled fraction (S-B)4-Si in a quantity of about 60%.

The molecular weight of the polystyrene block, also measured by GPC after demolition of the polymer carried out with OsO4 was equal to 12,900 daltons in exact agreement with the FT-IR measurement which gave a result equal to 40.1%. In this case the coupling efficiency was equal to 60%.

## CHARACTERIZATION OF THE POLYMERIC COMPOSITIONS

Three formulations comprising the polymeric compositions described in examples 1 (comparative), 2 and 3, are characterized as adhesives for non-woven fabrics. As a comparison, another 3 formulations are characterized, based on commercial S-I-S compositions with a total average molecular weight ($M_w$) of 150,000 - 170,000.

Comparative example 2 consists of an S-I-S with a coupling degree of 100%, comparative example 3 with a coupling degree of 80% and comparative example 4 with a coupling degree of 69%.

Various standard tests are used to measure the adhesion and cohesion characteristics of the adhesive compositions. In particular the following standard tests were used:

a) 180° Peel Adhesion, which measures the adhesive capacity on steel, polyethylene and polyester by peeling at 180°C. The above measurement, carried out according to regulation PSTC 1, is expressed in N/2.5 cm;
b) Polyken Tack, which expresses the adhesive capacity, carried out according to ASTM D 2979/71 and expressed in grams;
c) Quick stick, which expresses the adhesive capacity on steel by peeling at 90°C. The above measurement, carried out according to regulation PSTC 5, is expressed in N/2.5 cm;
d) Holding Power, which expresses the cohesive capacity measured on steel, carried out according to regulation PSTC 7, expressed in hours;
e) SAFT (Shear Adhesion Failure Temperature), which espresses the thermal resistance measured on steel (subjecting the sample to a controlled increase of temperature, according to an ECE Method) and expressed in °C.

The formulations were prepared with the hot-melt technology by mixing the polymeric composition with various quantities of tackifying resin of the type Zonatac 501 Lite and plasticizing oil of the type Primol 352. The formulations thus obtained were stabilized with Irganox 565 and Irganox 1010 of Ciba-Geigy.

The formulations consist of 100 parts of polymer, 300 parts by weight of Zonatac 501, 100 parts of Primol 352 and 1 part of stabilizer.

With respect to the Holding Power and SAFT measurement, this was carried out with a contact area of 1 square inch and a weight of 1 Kg.

The properties of the formulations are shown in Table 1.

TABLE 1

| PROPERTIES | Ex.2 | Ex.3 | Comp1 | Comp2 | Comp3 | Comp4 |
|---|---|---|---|---|---|---|
| Melt Viscos.(mPa.s) | | | | | | |
| at 160°C | 1480 | 1320 | 1680 | 4050 | 3840 | 3730 |
| 24hr. at 160°C | 690 | 720 | 820 | 2100 | 1815 | 1625 |
| 180° Peel Adhesion (N/2.5 cm) | | | | | | |
| Steel | 16 | 17.5 | 15.4 | 22.2* | 22.0* | 21.4* |
| PE | 13.3 | 13.3 | 17.4 | 20.3* | 20.3* | 20.2* |
| PET | 14.2 | 17.6 | 16.2 | 21.2* | 21.0* | 20.4* |
| Quick Stick (N/2.5 cm) | | | | | | |
| Steel | 13.7 | 14.4 | 0 | 13.8 | 14.5 | 15.4 |
| Polyken Tack (g) | | | | | | |
| | 518 | 635 | 240 | 1410 | 1460 | 1500 |
| Holding Power (h) | | | | | | |
| Steel at 40°C | 35 | 38 | 34 | 2.5 | 3.0 | 4.5 |
| SAFT (°C) | 61 | 63 | 60 | 49 | 48 | 46 |
| Polymer | SBS | SBS | SBS | SIS | SIS | SIS |
| coupling % | 70 | 60 | 98 | 100 | 80 | 69 |

\* = Cohesive failure

With respect to the data of table 1, on comparing the formulations based on SIS and SBS, it can be asserted that:

1) in general the viscosity of the formulates based on SBS is much lower than the formulations based on SIS with obvious advantages of processability;
2) the peel adhesion values of the different supports show a different behaviour of the two polymer families: cohesive failure of the material based on SIS, adhesive failure in the case of the material based on SBS;
3) the holder power gives decidedly higher values in favour of the formulation based on SBS;
4) the temperature resistance (SAFT) is better for the characteristics of formulations based on SBS.

With respect to the SBS formulations with a different coupling efficiency, it can be observed that the tack properties (poliken tack and quick stick), are drastically influenced by the coupling percentage. In fact, there are negative results for a high coupling (98%, comparative example 1), whereas there are extremely good results for coupling values of between 70 and 82%. Of these two coupling values, 70% is more preferable.

**Claims**

1. Use as an adhesive for non-woven fabrics, of a block polymeric composition of the type A-B, wherein A represents the block of a monoalkenylarene and B represents the block of 1,3-butadiene as such or at various degrees of hydrogenation, the content of monoalkenylarene A being from 30 to 50% by weight with respect to the sum of A and B, which comprises:

   a) from 15 to 50% by weight of uncoupled linear structures of the type A-B, having a weight average molecular weight of between 15,000 and 50,000 daltons;
   b) coupled radial structures having general formula $(A-B)_4-M$ in a quantity of between 50 and 85% by weight, having a weight average molecular weight of between 80,000 and 180,000, wherein M is a tetravalent metal, preferably Silicon.

2. Use as an adhesive for non-woven fabrics of a polymeric composition according to claim 1, characterized in that it comprises:

a) from 20 to 45% by weight of uncoupled linear structures of the type A-B;
b) coupled radial structures having general formula $(A-B)_4$-M in a quantity of between 55 and 80% by weight, the content of monoalkenylarene A being from 35 to 45% by weight with respect to the sum of A and B.

3. Use as an adhesive for non-woven fabrics of a polymeric composition according to claim 1, characterized in that:

a) the linear copolymers have a weight average molecular weight of between 25,000 and 40,000 daltons;
b) the radial copolymers have a weight average molecular weight of between 90,000 and 150,000 daltons.

4. Use as an adhesive for non-woven fabrics of a polymeric composition according to claim 1, characterized in that the above polymeric composition has a content of monoalkenylarenes of between 35 and 45% by weight with respect to the sum of monoalkenylarene and butadiene.

5. Process for the preparation of the block copolymer composition according to claim 1, which comprises:

1) reaction of a monoalkenylarene with a Lithium derivative having general formula R-Li wherein R is a hydrocarbon radical selected from aliphatic and cycloaliphatic radicals with a number of carbon atoms of between 2 and 20;
2) reaction with butadiene of the mixture resulting from step (1);
3) reaction of the mixture resulting from step (2) with a tetrafunctional coupling agent $MX_4$, wherein X is selected from Chlorine, Bromine and Iodine, preferably Chlorine, and M is a metal selected from Tin and Silicon, preferably Silicon, the above coupling agent being added in a quantity of between 50 and 85 moles per 100 moles of the Lithium compound of step (1);
4) treatment of the mixture obtained in step (3) with a quenching agent in such a quantity that the sum of the moles of the quenching agent and the coupling agent is at least stoichiometrically equal to the moles of Lithium of step (1);
5) recovery of the block copolymer composition thus produced;
6) optional hydrogenation, partial or total, of the dienic block B of the composition of the product obtained in step (5).

6. Process according to claim 5, characterized in that the quenching agent of step (4) is selected from silico-organic monochloroderivative compounds.

7. Adhesive composition for non-woven fabrics which comprises:

a) the polymeric composition according to claim 1,
b) tackifying resins, in a quantity of between 150 and 450 parts per 100 parts of rubber (a);
c) fluidifying and/or plasticizing resins in a quantity of between 50 and 150 parts per 100 parts of rubber (a).

8. Adhesive composition according to claim 7, characterized in that the tackifying resin (b) is a modified terpenic hydrocarbon resin.

9. Adhesive composition according to claim 8, characterized in that the modified terpenic hydrocarbon resin has a softening point of between 80 and 115°C.

10. Adhesive composition according to claim 7, characterized in that the fluidifying resin (c) is a liquid polyterpenic resin.

11. Adhesive composition according to claim 7, characterized in that the tackifying resin (b) is between 250 and 350 parts per 100 parts of polymer (a); the fluidifying and/or plasticizing resin (c) is between 70 and 120 parts per 100 parts of polymer (a).

12. Process for the preparation of the adhesive composition according to claim 7, which consists in mixing components (a) to (c), and the other possible additives, at temperatures of between 150 and 190°C.

EP 0 757 066 A1

| European Patent Office | EUROPEAN SEARCH REPORT | Application Number EP 96 20 1980 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 404 185 (NIPPON ZEON CO., LTD) * the whole document * | 5-12 | C08F297/04 C09J153/02 D04H13/00 |
| D,X | US-A-4 096 203 (D. ST. CLAIR) * the whole document * | 5-12 | |
| L | US-A-5 420 203 (S. DILLMAN ET AL.) | 5-12 | |

TECHNICAL FIELDS SEARCHED (Int.Cl.6)

C08F

The present search report has been drawn up for all claims

| Place of search | Date of completion of the search | Examiner |
|---|---|---|
| THE HAGUE | 24 September 1996 | Glikman, J-F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8